# EUROPÄISCHE PATENTANMELDUNG

(11) **EP 2 026 612 A1**
(43) Veröffentlichungstag der Anmeldung: **18.02.2009**
(21) Anmeldenummer: 08014246.6
(22) Anmeldetag: 08.08.2008
(51) Int. Cl.: H04W 4/02

(54) **Vorrichtung zum Handhaben von Lokalisierungsdaten eines Mobilfunkendgerätes**

(30) Priorität: 16.08.2007 DE 102007038764
(71) Anmelder: Björn Steiger Stiftung Service GmbH, 70174 Stuttgart (DE)
(72) Erfinder: Holzer, Harald, 76698 Ubstadt-Weiher (DE); Jelkic, Dirk, 76761 Ruelzheim (DE); Fendl, Andreas, 73547 Lorch (DE); Graf, Christoph, 70174 Stuttgart (DE)
(74) Vertreter: Zinkler, Franz

(57) **Zusammenfassung**

Eine Vorrichtung (100) zum Handhaben von Lokalisierungsdaten eines Mobilfunkendgerätes, das angepasst ist, um über einen Sprachkanal und einen Datenkanal zu kommunizieren. Die Vorrichtung (100) umfasst eine Einrichtung (110) zum Empfangen der Lokalisierungsdaten des Mobilfunkendgerätes über den Datenkanal und eine Einrichtung (120) zum Speichern der Lokalisierungsdaten des Mobilfunkendgerätes. Die Vorrichtung (100) umfasst ferner eine Einrichtung (130) zum Ausgeben der Lokalisierungsdaten an eine Rettungsleitstelle über einen weiteren Datenkanal, ansprechend auf eine Notfallsituation des Mobilfunkendgerätes.

## Beschreibung

Die vorliegende Erfindung bezieht sich auf die Handhabung von Notrufen aus Mobilfunknetzen.

Die Durchführung von Notrufen stellt eine essentielle Funktionalität moderner Mobilfunknetze dar. Beispielsweise ist das Absetzen eines Notrufes auch ohne eine SIM-Karte (SIM = Subscriber Identity Module, Teilnehmeridentifikationsmodul) möglich. Ferner erlauben Mobilfunktelefone die Durchführung von Notrufen, selbst wenn diese gesperrt sind, d. h. wenn dem Benutzer die PIN (PIN = Personal Identification Number) nicht bekannt ist. Im Falle eines Notrufes ist es immens wichtig, dass einem in Not Geratenen schnell geholfen wird. Dabei ist es sehr hilfreich, wenn die Position des Notrufenden schnell herausgefunden werden kann. Im Bereich der konventionellen Technik geschieht dies durch einen Dialog, d. h. der Notruf wird über eine Sprachverbindung an eine Rettungsleitstelle durchgestellt, und der in Not Geratene kann so der Rettungsleitstelle seine Position mitteilen.

Dieser konventionelle Vorgang kann problematisch sein, wenn der in Not Geratene seine Position nicht kennt. Beispielsweise kann es bei Verkehrsunfällen vorkommen, dass nur ein großer Autobahnabschnitt angegeben werden kann, wo sich der Notfall ereignet hat. Wenn ein in Not Geratener nicht mehr in der Lage ist, seine genaue Position mitzuteilen, so sind im Bereich der konventionellen Technik nur sehr ungenaue Positionierungs- oder Lokalisierungsverfahren möglich. Beispielsweise kann aufgrund der Zellstruktur von Mobilfunknetzen eine Zelle identifiziert werden, in die das Mobilfunkendgeräte des Notrufenden eingebucht ist. Diese Art der Positionsbestimmung ist jedoch sehr ungenau, da Mobilfunknetze, insbesondere in dünn besiedelten Gebieten, oftmals Zellradien von mehr als einem Kilometer aufweisen können.

Es ist die Aufgabe der vorliegenden Erfindung ein verbessertes Konzept zur Ortung eines notrufenden Mobilfunkteilnehmers zu schaffen.

Diese Aufgabe wird gelöst durch eine Vorrichtung zum Handhaben von Lokalisierungsdaten eines Mobilfunkendgerätes gemäß Anspruch 1, ein Ortungssystem zur Ortung eines Mobilfunkendgerätes gemäß Anspruch 14 und ein Verfahren zur Ortung eines Mobilfunkendgerätes gemäß Anspruch 15.

Ausführungsbeispiele der vorliegenden Erfindung schaffen eine Vorrichtung zum Handhaben von Lokalisierungsdaten eines Mobilfunkendgerätes, das angepasst ist, um über einen Sprachkanal und einen Datenkanal zu kommunizieren. Die Vorrichtung weist eine Einrichtung zum Empfangen der Lokalisierungsdaten des Mobilfunkendgerätes über den Datenkanal auf und eine Einrichtung zum Speichern der Lokalisierungsdaten des Mobilfunkendgerätes. Die Vorrichtung umfasst ferner eine Einrichtung zum Ausgeben der Lokalisierungsdaten an eine Rettungsleitstelle über einen weiteren Datenkanal ansprechend auf eine Notfallsituation des Mobilfunkendgerätes.

Ausführungsbeispiele umfassen ferner Ortungssysteme zur Ortung eines Mobilfunkendgerätes mit einer Vorrichtung zum Handhaben von Lokalisierungsdaten des Mobilfunkendgerätes gemäß obiger Beschreibung und einer Rettungsleitstelle zum Auswerten der Lokalisierungsdaten.

Ausführungsbeispiele schaffen ferner ein Verfahren zur Ortung eines Mobilfunkendgerätes in einer Rettungsleitstelle mit einem Schritt des Sendens von Lokalisierungsdaten über einen Datenkanal von dem Mobilfunkendgerät an eine Vorrichtung zum Handhaben von Lokalisierungsdaten. Das Verfahren umfasst ferner einen Schritt des Ausgebens der Lokalisierungsdaten an die Rettungsleitstelle und einen Schritt des Auswertens der Lokalisierungsdaten.

Der vorliegenden Erfindung liegt der Kerngedanke zugrunde, dass eine Vorrichtung zum Handhaben von Lokalisierungsdaten eines Mobilfunkendgerätes automatisiert Lokalisierungsdaten von einem Mobilfunkendgerät empfängt, sobald dieses einen Notruf absetzt. Die Übertragung von Lokalisierungsdaten kann dabei beispielsweise über eine SMS (SMS = Short Message Service, zu dt. Kurznachrichtendienst), eine E-Mail (elektronische Post) oder einen anderen Datendienst erfolgen. Die Vorrichtung speichert dann die so erhaltenen Lokalisierungsdaten und stellt diese einer Rettungsleitstelle zur Verfügung. In Ausführungsbeispielen können dabei die Lokalisierungsdaten entweder automatisiert nach deren Eingang oder aber auf Anfrage der Rettungsleitstelle bereitgestellt werden. In Ausführungsbeispielen kann parallel eine Sprachverbindung zwischen dem Notrufenden und der Rettungsleitstelle hergestellt werden, wobei noch während der Sprachverbindung die Rettungsleitstelle bei der Vorrichtung zum Handhaben der Lokalisierungsdaten des Mobilfunkendgerätes die Lokalisierungsdaten abrufen oder erhalten kann. Die Rettungsleitstelle hat somit die Möglichkeit, die Position eines Notrufenden direkt festzustellen. Ausführungsbeispiele bieten dabei den Vorteil, dass selbst wenn der Notrufende seine Position nicht kennt, bzw. nicht mehr in der Lage ist, diese zu kommunizieren, die Position automatisiert bestimmt werden kann. In Ausführungsbeispielen wäre es beispielsweise auch denkbar, dass ein Notruf, und damit die automatisierte Übertragung von Lokalisierungsdaten durch das Auslösen eines Airbags veranlasst wird.

Ausführungsbeispiele schaffen somit einen zentralen Netzwerkknoten, der sich zwischen dem Mobilfunkendgerät bzw. dem Mobilfunknetz und einer Rettungsleitstelle befindet, und der automatisiert Lokalisierungsdaten von einem Mobilfunkendgerät empfangen kann, sowie diese entweder auf Anfrage oder auch automatisiert an die Rettungsleitstelle weiterleitet. Im Folgenden können Ausführungsbeispiele solcher Vorrichtungen auch Push-Server genannt werden. Der Begriff Push-Server kommt dabei dadurch zustande, dass zum einen Lokalisierungsdaten von einem Mobilfunkendgerät auf einen Netzwerkknoten geschoben ("gepushed") werden und zum anderen der Netzwerkknoten die Lokalisierungsdaten wiederum einer Rettungsleitstelle bereitstellt und aus der Sicht der Rettungsleitstelle als Server (zu dt. Bereitsteller) fungiert.

Im Folgenden werden Ausführungsbeispiele der vorliegenden Erfindung anhand der beiliegenden Figuren im Detail beschrieben. Es zeigen:
- Fig. 1: ein Ausführungsbeispiel einer Vorrichtung zum Handhaben von Lokalisierungsdaten eines Mobilfunkendgerätes;
- Fig. 2: ein weiteres Ausführungsbeispiel einer Vorrichtung zum Handhaben von Lokalisierungsdaten eines Mobilfunkendgerätes;
- Fig. 3: ein weiteres Ausführungsbeispiel einer Vorrichtung zum Handhaben von Lokalisierungsdaten eines Mobilfunkendgerätes;
- Fig. 4: ein weiteres Ausführungsbeispiel einer Vorrichtung zum Handhaben von Lokalisierungsdaten eines Mobilfunkendgerätes;
- Fig. 5: ein Ablaufdiagramm eines Ausführungsbeispiels eines Verfahrens zum Handhaben von Lokalisierungsdaten eines Mobilfunkendgerätes;
- Fig. 6: ein Ausführungsbeispiel eines einleitenden Prozesses vor einer Ortung;
- Fig. 7: ein Ausführungsbeispiel einer Abfrage von Positionsdaten an einem Push-Server;
- Fig. 8: ein Ausführungsbeispiel eines Ortungssystems zur Ortung eines Mobilfunkendgerätes;
- Fig. 9a: eine graphische Darstellung zur Erläuterung eines Ausführungsbeispiels eines erfindungsgemäßen Verfahrens;
- Fig. 9b: Ausführungsbeispiel eines MSD-Formates;
- Fig. 9c: Ausführungsbeispiel eines Benefon-Formates; und
- Fig. 10: ein Ausführungsbeispiel zur automatisierten Bereitstellung von Lokalisierungsdaten registrierter Mobilfunkteilnehmer.

Im Folgenden werden Ausführungsbeispiele anhand der beiliegenden Figuren im Detail beschrieben. Es sei darauf hingewiesen, dass gleiche Komponenten in den beiliegenden Figuren gleiche Bezugszeichen aufweisen, und stellenweise auf wiederholte Beschreibung gleicher Komponenten verzichtet wird.

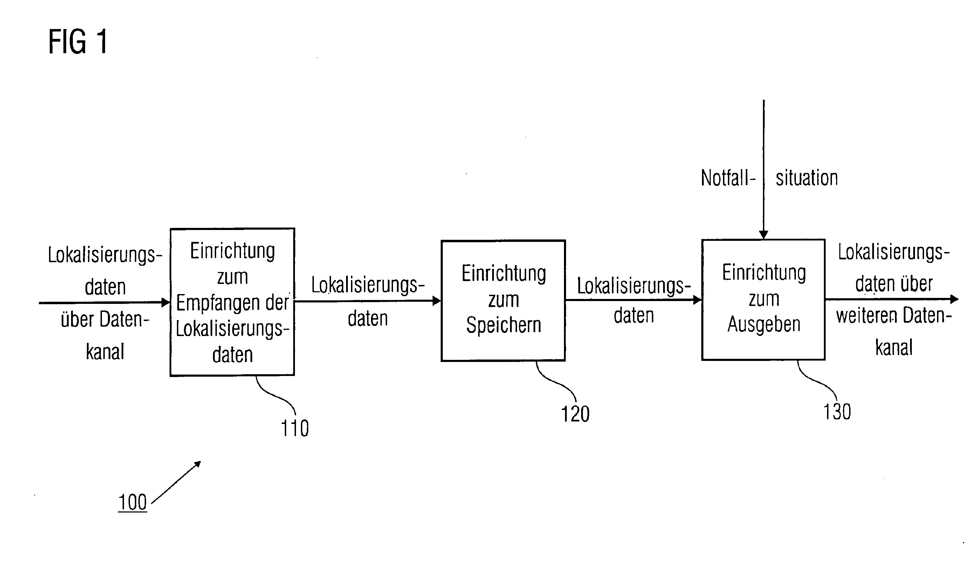

Fig. 1 zeigt eine Vorrichtung 100 zum Handhaben von Lokalisierungsdaten eines Mobilfunkendgerätes, das angepasst ist, um über einen Sprachkanal und einen Datenkanal zu kommunizieren. Die Vorrichtung 100 weist eine Einrichtung 110 zum Empfangen der Lokalisierungsdaten des Mobilfunkendgerätes über den Datenkanal auf. Ferner umfasst die Vorrichtung 100 eine Einrichtung 120 zum Speichern der Lokalisierungsdaten des Mobilfunkendgerätes und eine Einrichtung 130 zum Ausgeben der Lokalisierungsdaten an eine Rettungsleitstelle über einen weiteren Datenkanal, ansprechend auf eine Notfallsituation des Mobilfunkendgerätes.

In einem Ausführungsbeispiel könnte das Mobilfunkendgerät beispielsweise automatisiert eine SMS mit Lokalisierungsdaten versenden, sobald eine Notfallsituation vorliegt. Eine Notfallsituation könnte beispielsweise vorliegen, wenn eine bestimmte Vorwahl, z. B. 110 oder 112, in das Mobilfunkendgerät eingegeben wird, in anderen Ausführungsbeispielen könnte das Mobilfunkendgerät auch mit dem Airbag-Sensor eines Fahrzeugs gekoppelt sein, und somit eine Notfallsituation durch das Auslösen eines Airbags erzeugt werden. Ausführungsbeispiele der Vorrichtung 100 können angepasst sein, um in einer Notfallsituation beispielsweise eine solche SMS von einem, Mobilfunkendgerät zu erhalten, die Lokalisierungsdaten zwischenzuspeichern, und dann einer Rettungsleitstelle zur Ortung zur Verfügung zu stellen. Eine Notfallsituation kann dabei in einem Ausführungsbeispiel aus der Vorrichtung 100 vorliegen, sobald Lokalisierungsdaten eines Mobilfunkendgerätes empfangen werden. In solchen Ausführungsbeispielen kann das Ausgeben der Lokalisierungsdaten an eine Rettungsleitstelle demnach automatisiert erfolgen.

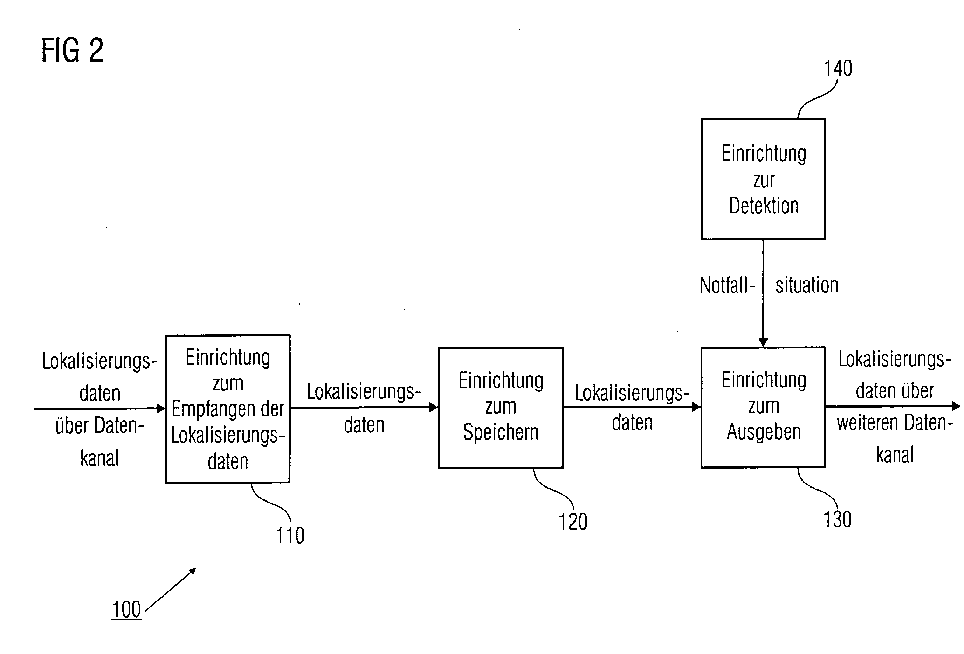

In anderen Ausführungsbeispielen kann die Vorrichtung 100 ferner eine Einrichtung 140 zur Detektion der Notfallsituation aufweisen. Ein solches Ausführungsbeispiel ist in der Fig. 2 dargestellt. Fig. 2 zeigt ein Ausführungsbeispiel einer Vorrichtung 100 zum Handhaben von Lokalisierungsdaten eines Mobilfunkendgerätes, analog zu dem Ausführungsbeispiel der Fig. 1. Zusätzlich zu den Komponenten der Fig. 1 weist die Vorrichtung 100 in der Fig. 2 eine Einrichtung 140 zur Detektion der Notfallsituation auf. Eine Notfallsituation kann in Ausführungsbeispielen aus den Lokalisierungsdaten oder Zusatzinformationen detektiert werden. Beispielsweise ist es denkbar, dass in einem Ausführungsbeispiel Mobilfunkendgeräte in regelmäßigen Abständen Lokalisierungsdaten zur Verfügung stellen, und durch eine Indikation bei der Datenübertragung anzeigen, ob tatsächlich ein Notfall vorliegt. Die Einrichtung 140 zur Detektion könnte demnach anhand eines Indikators detektieren, ob es sich um einen tatsächlichen Notfall oder nur eine Aktualisierung der Lokalisierungsdaten handelt. In einem solchen Fall könnte die Rettungsleitstelle selbst zumindest auf ältere Lokalisierungsdaten zurückgreifen, die insoweit dass sie nicht zu veraltet sind, immer noch eine recht genaue Positionsbestimmung zulassen können.

In Ausführungsbeispielen kann die Einrichtung 140 zur Detektion auch angepasst sein, um eine Notfallsituation durch den Empfang einer Lokalisierungsdatenanfrage der Rettungsleitstelle zu detektieren. In diesem Ausführungsbeispiel würde die Vorrichtung 100 zum Handhaben von Lokalisierungsdaten eines Mobilfunkendgerätes die Lokalisierungsdaten erst nach Empfang einer Anfrage der Rettungsleitstelle ausgeben.

In Ausführungsbeispielen kann die Einrichtung 110 zum Empfangen der Lokalisierungsdaten angepasst sein, um die Lokalisierungsdaten über ein Mobilfunknetz, beispielsweise direkt von einem SMSC (SMSC = Short Message Service Center, Kurznachrichtenvermittlungsstelle) zu empfangen. Die Lokalisierungsdaten können in Ausführungsbeispielen demnach über SMS, MMS (MMS = Multimedia Message Service, Multimedialnachrichtendienst), aber auch über E-Mail oder einen anderen Datendienst über einen Datenkanal empfangen werden.

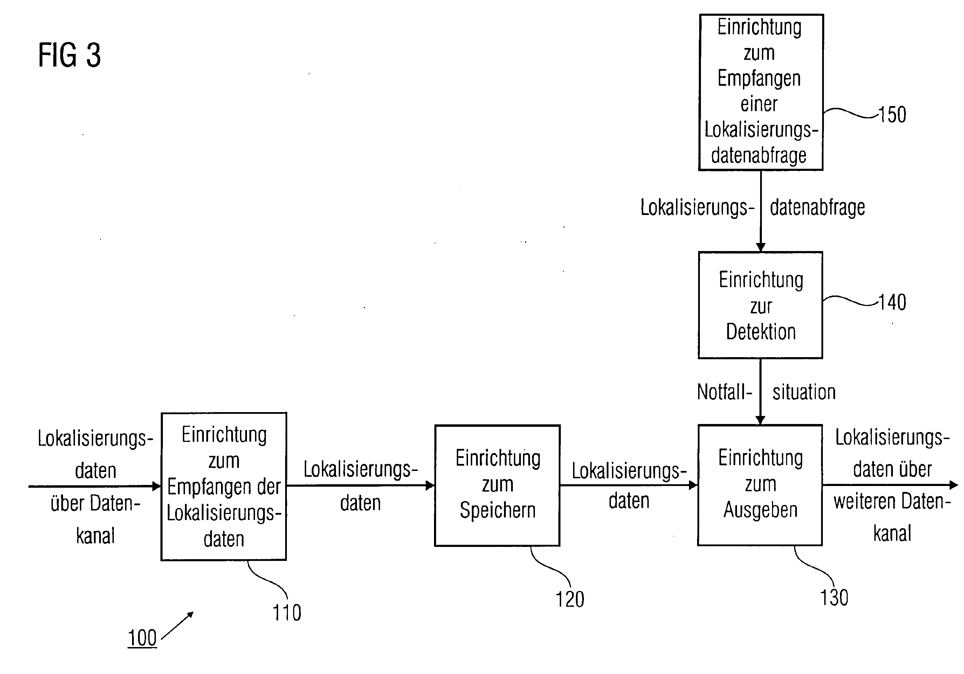

Fig. 3 zeigt ein weiteres Ausführungsbeispiel einer Vorrichtung 100, die die gleichen Komponenten enthält, wie sie bereits anhand der Fig. 1 und 2 erläutert wurden. Zusätzlich weist die Vorrichtung 100, die in der Fig. 3 dargestellt ist, eine Einrichtung 150 zum Empfangen einer Lokalisierungsdatenab- oder anfrage einer Rettungsleitstelle auf. Die Einrichtung 150 zum Empfangen der Lokalisierungsdatenab-/anfrage kann dabei angepasst sein, um die Lokalisierungsdatenabfrage über das WWW (WWW = World Wide Web, weltweites Netz), das Internet, eine IP- (IP = Internet Protocol, Internet Protokoll) Verbindung, eine TCP-Verbindung (TCP = Transmission Control Protocol, Übertragungskotrollprotokoll) oder durch andere Datenverbindungen zu empfangen. In solchen Ausführungsbeispielen kann die Einrichtung 140 zur Detektion angepasst sein, um die Notfallsituation basierend auf der Lokalisierungsdatenabfrage zu detektieren und die Bereitstellung selbiger auszulösen.

Insbesondere, in Ausführungsbeispielen, in denen eine Datenübertragung über öffentliche Netze, wie beispielsweise das Internet, genutzt wird, können weitere Ausführungsbeispiele auch angepasst sein, um die Lokalisierungsdatenabfrage zu authentifizieren.

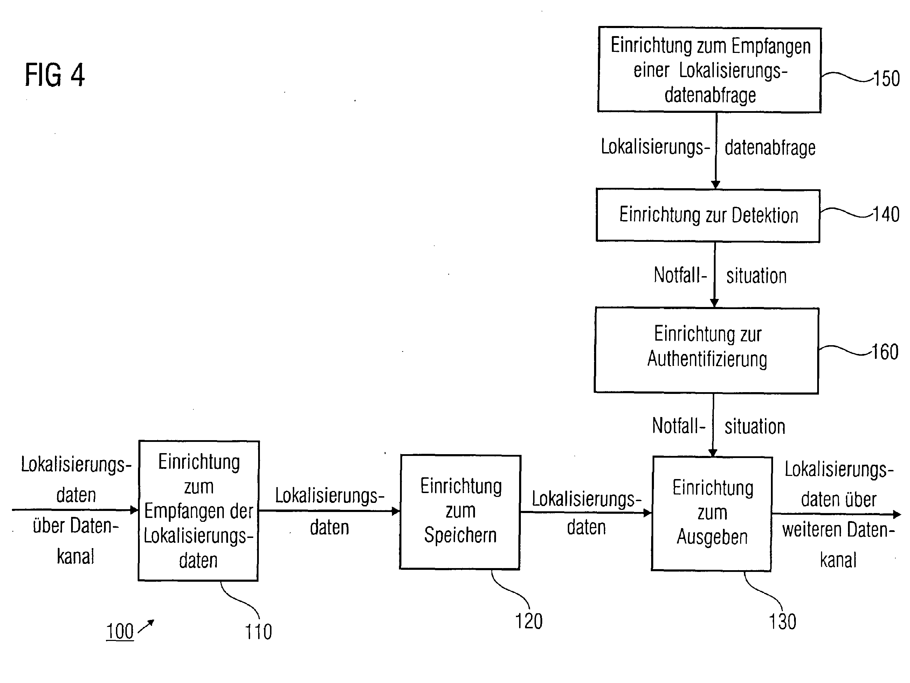

Die Fig. 4 zeigt ein Ausführungsbeispiel, das die anhand der Fig. 1 bis 3 beschriebenen Komponenten aufweist, und ferner eine Einrichtung 160 zur Authentifizierung bzw. Autorisierung aufweist. Gemäß der Fig. 4 findet also zunächst eine Authentifizierung der Lokalisierungsdatenabfrage bzw. der detektierten Notfallsituation statt. In der Fig. 4 ist die Einrichtung 160 zur Authentifizierung der Einrichtung 140 zur Detektion nachgeschaltet. In anderen Ausführungsbeispielen könnte die Einrichtung 160 zur Authentifizierung auch zwischen die Einrichtung 150 zum Empfangen einer Lokalisierungsdatenabfrage und die Einrichtung 140 zur Detektion geschaltet sein.

In weiteren Ausführungsbeispielen kann die Einrichtung 120 zum Speichern angepasst sein, um Zusatzinformationen zu den Lokalisierungsdaten zu speichern. Diese Zusatzinformationen können beispielsweise eine MSISDN (MSISDN = Mobile Subscriber Integrated Services Digital network Number, Mobilfunkteilnehmernummer), Gerätedaten, Ortungsoptionen, Teilnehmerdaten, Statusinformationen eines Fahrzeugs oder eines Teilnehmers, Fahrzeugtyp oder Auslöser für die Notfallsituation usw., umfassen. In anderen Ausführungsbeispielen wären weitere Zusatzinformationen wie z. B. Patientendaten, Blutgruppen, Vitaldaten oder medizinische Daten denkbar, die in einem Notfall an die Rettungsleitstelle übermittelt werden, um ein möglichst umfassendes Bild der Notfallsituation zu vermitteln, in dem der Ort des Notfalls dargestellt ist, aber auch jegliche Zusatzinformationen über Beteiligte, beteiligte Fahrzeuge usw. enthalten sein können.

In weiteren Ausführungsbeispielen kann die Vorrichtung 100 ferner eine Einrichtung zur Registrierung von Mobilfunkteilnehmern aufweisen. In diesen Ausführungsbeispielen können für registrierte Teilnehmer Zusatzdienste, wie beispielsweise automatisiertes Orten oder Versenden von Lokalisierungsdaten etabliert werden. In Ausführungsbeispielen kann die Einrichtung 130 zum Ausgeben der Lokalisierungsdaten über einen weiteren Datenkanal an die Rettungsleitstelle ausgebildet sein, um die Daten ebenfalls über eine TCP/IP-Verbindung, also das Internet oder das WWW auszugeben. In anderen Ausführungsbeispielen wäre es ebenfalls denkbar, dass die Einrichtung 130 die Lokalisierungsdaten über ein Fax, eine SMS, eine E-Mail oder dergleichen an die Rettungsleitstelle übermittelt.

Ausführungsbeispiele umfassen ferner ein Ortungssystem zur Ortung eines Mobilfunkendgerätes mit einer Vorrichtung zum Handhaben von Lokalisierungsdaten eines Mobilfunkendgerätes gemäß obiger Beschreibung und eine Rettungsleitstelle zum Auswerten der Lokalisierungsdaten. Beispielsweise können die Lokalisierungsdaten in der Rettungsleitstelle in einer Karte dargestellt werden.

Ferner schaffen Ausführungsbeispiele der vorliegenden Erfindung ein Verfahren zur Ortung eines Mobilfunkendgerätes in einer Rettungsleitstelle, mit einem Schritt des Sendens von Lokalisierungsdaten über einen Datenkanal von dem Mobilfunkendgerät an eine Vorrichtung zum Handhaben von Lokalisierungsdaten gemäß obiger Beschreibung, einem Schritt des Ausgebens der Lokalisierungsdaten an die Rettungsleitstelle und einem Schritt des Auswertens der Lokalisierungsdaten in der Rettungsleitstelle.

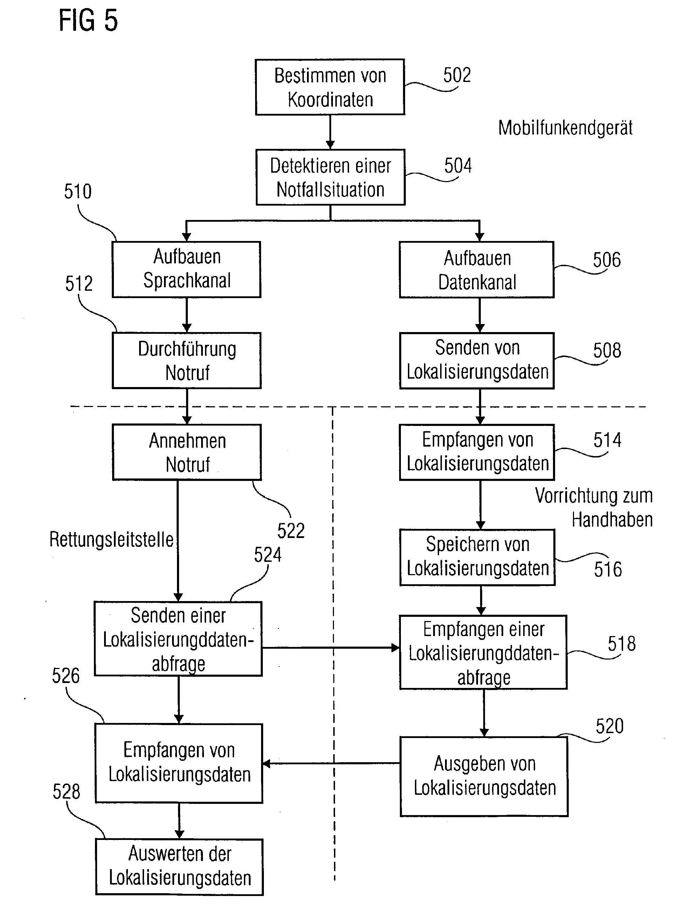

Die Fig. 5 zeigt ein Ablaufdiagramm eines Ausführungsbeispiels eines erfindungsgemäßen Verfahrens zur Ortung. Das Ablaufdiagramm, welches in der Fig. 5 dargestellt ist, ist durch gestrichelte Linien in drei Bereiche aufgeteilt, wobei im oberen Bereich diejenigen Schritte des Verfahrens aufgeführt sind, die in dem betrachteten Ausführungsbeispiel von einem Mobilfunkendgerät ausgeführt werden können. Im unteren linken Bereich sind diejenigen Schritte dargestellt, die von einer Rettungsleitstelle ausgeführt werden können, im unteren rechten Bereich diejenigen Schritte, die von einer Vorrichtung zum Handhaben der Lokalisierungsdaten, die im Folgenden auch Push-Server genannt wird, ausgeführt werden können.

Seitens des Mobilfunkendgerätes, zeigt das Ausführungsbeispiel der Fig. 5 zunächst einen Schritt 502 des Bestimmens von Koordinaten, respektive der Position des Mobilfunkendgerätes. In diesem Schritt können sowohl das Bestimmen von GPS-Koordinaten (GPS = Global Positioning System, globales Positionsbestimmungssystem), als auch andere Lokalisierungsverfahren zum Einsatz kommen. Diese Verfahren können in Ausführungsbeispielen der vorliegenden Erfindung beliebig ausgestaltet sein, der Vollständigkeit halber sei erwähnt, dass jegliches Verfahren, das zur Ermittlung der Position des Mobilfunkendgerätes dient, zum Einsatz kommen kann. In einem nächsten Schritt 504 findet eine Detektion der Notfallsituation statt. Wie bereits oben erwähnt, kann dies durch Wählen einer Notrufnummer, wie beispielsweise 110 oder 112, geschehen, jedoch auch automatisiert, beispielsweise durch Auslösen eines Airbags oder Ähnlichem. Nach dem Detektieren einer Notfallsituation 504 folgt ein Schritt des Aufbauens eines Datenkanals 506, über das Mobilfunknetz zu einem Push-Server oder einer Vorrichtung zum Handhaben der Lokalisierungsdaten. Nachdem der Datenkanal aufgebaut wurde, folgt ein Schritt des Sendens der Lokalisierungsdaten 508. Parallel zu den Schritten 506 und 508 kann ein Mobilfunkendgerät in Ausführungsbeispielen auch einen Sprachkanal zu einer Rettungsleitstelle in einem Schritt 510 aufbauen und nachfolgend in einem Schritt 512 einen Sprachnotruf durchführen.

Die Vorrichtung zum Handhaben der Lokalisierungsdaten oder der Push-Server empfängt in einem Schritt 512 die Lokalisierungsdaten des Mobilfunkendgerätes und speichert diese in einem Schritt 516. Optional kann der Push-Server ferner einen Schritt des Empfangens einer Lokalisierungsdatenabfrage 518 aufweisen, der dann von einem Schritt des Ausgebens von Lokalisierungsdaten 520 gefolgt wird. Der Schritt des Ausgebens von Lokalisierungsdaten 520 kann in Ausführungsbeispielen auch automatisiert, d. h. ohne den Schritt des Empfangens einer Lokalisierungsdatenabfrage 518 erfolgen.

In betrachteten Ausführungsbeispielen kann die Rettungsleitstelle den Notruf des Mobilfunkendgerätes in einem Schritt 522 annehmen. In der Rettungsleitstelle kann dann ein optionaler Schritt des Sendens einer Lokalisierungsdatenabfrage 524 an den Push-Server erfolgen. Dieser Schritt wird im betrachteten Ausführungsbeispiel gefolgt von einem Schritt 526 des Empfangens von Lokalisierungsdaten, der auch wie bereits oben erwähnt automatisiert erfolgen kann. Die Rettungsleitstelle ist dann nachfolgend in der Lage, in einem Schritt 528 die Lokalisierungsdaten auszuwerten, wobei gemäß obiger Beschreibung auch Zusatzinformationen ausgewertet werden können. Beispielsweise können die Positionsdaten oder Lokalisierungsdaten in einer Karte dargestellt werden, wobei optional auch Zusatzinformationen angezeigt werden können.

Im Folgenden wird ein ausführliches Ausführungsbeispiel dargestellt, wobei auch Anforderungen an Komponenten und die Systemlandschaft einer Applikation zur Annahme von aktiv, beispielsweise per SMS gesendeten Lokalisierungsinformationen beschrieben werden. Ausführungsbeispiele stellen beispielsweise Plattformen zur Annahme von eCall-Daten bereit, die auch aus Kraftfahrzeugen heraus gesendet werden. Generell können Ausführungsbeispiele auch bei jeder anderen Form von aktiv sendenden Endgeräten zum Einsatz kommen und deren Daten entgegennehmen. Wie bereits oben erwähnt, kann der Begriff Push-Server eine Vorrichtung zum Handhaben von Lokalisierungsdaten bezeichnen, also ein eigenständiges System, welches in Ausführungsbeispielen mit dedizierter Hardware betrieben werden kann, um beispielsweise in Abhängigkeit von bestehenden Ortungsapplikationen Lokalisierungsdaten zu liefern und so zum Einsatz zu kommen. Ein Push-Server kann hierbei als Lieferant von Positionsdaten fungieren, wobei eine Ortungsapplikation bei Auswahl eines Datensatzes mit entsprechendem Endgerätetyp die Positionsdaten nicht direkt über ein Mobilfunkendgerät, sondern beim Push-Server abfragt. Ausführungsbeispiele können demnach ein System umfassen, in dem ein Push-Server und eine Ortungsapplikation, beispielsweise auch koalloziert in einer Rettungsleitstelle integriert sind.

In Ausführungsbeispielen können in einer Rettungsleitstelle bei Aufruf eines Kundendatensatzes, beispielsweise mit Endgerätetyp $Kfz_Hersteller oder $push_Endgerät die Anfrage per SMS an die Headunit oder Kommunikationseinheit des Fahrzeugs oder an das Endgerät gesendet werden, aber auch via TCP/IP an den Push-Server. Die unterschiedlichen "Live-Service"-Namen innerhalb eines Kommunikationsmoduls können in Ausführungsbeispielen zu statistischen Zwecken dienen, können aber auch die Möglichkeit bieten, einem potentiellen Disponenten eine Aussage darüber zu bieten, von welcher Art Endgerät der Notruf ausgelöst wurde.

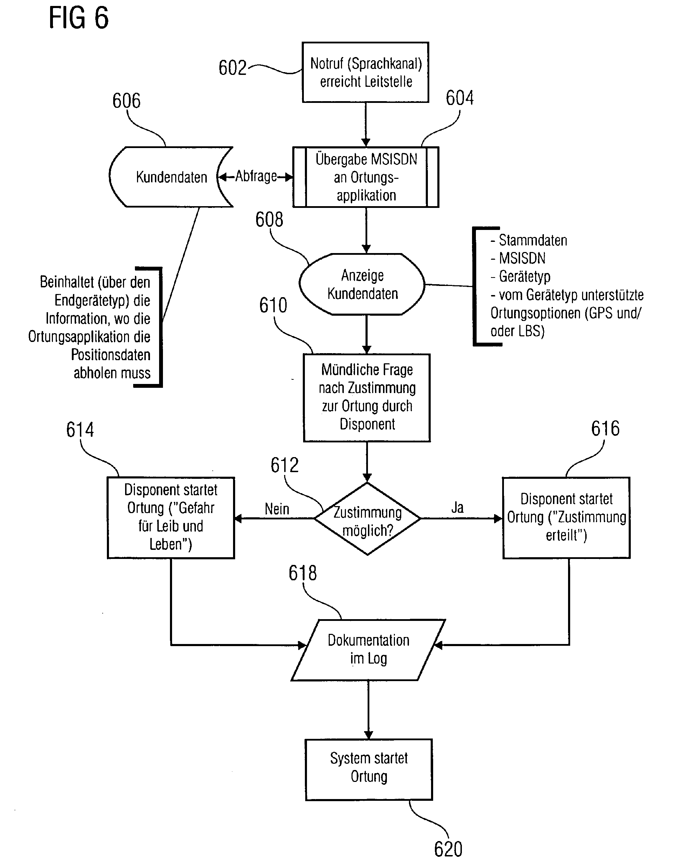

Die Fig. 6 zeigt ein Ausführungsbeispiel eines einleitenden Prozesses vor einer Ortung. In einem Schritt 602 erreicht ein Notruf eine Leitstelle bzw. Rettungsleitstelle über einen Sprachkanal. Dabei wird beispielsweise die MSISDN an die Ortungsapplikation in einem Schritt 604 übergeben. Basierend auf dieser Identifikation kann eine Abfrage der Kundenarten in einem Schritt 606 erfolgen. In den Kundendaten können ebenfalls Zusatzinformationen enthalten sein.

Die Zusatzinformationen können Informationen beispielsweise über den Endgerätetyp enthalten, aber auch Informationen wo eine Ortungsapplikation Positions- oder Lokalisierungsdaten abholten könnte, d. h. beispielsweise auch eine IP-Adresse eines Push-Servers. Ferner können die Zusatzinformationen Patientendaten oder medizinische Daten eines Kunden aufweisen. In einem Schritt 608 können die Kundendaten dann angezeigt bzw. ausgewertet werden, wobei die Kundendaten dann die Stammdaten, die MSISDN, den Gerätetyp, vom Gerätetyp unterstützte Ortungsoptionen, wie beispielsweise GPS oder LBS-Ortung (LBS = Location Based Dervices, ortsbasierte Dienste) umfassen. Unter LBS oder LBS-Ortung seien an dieser Stelle jegliche Algorithmen verstanden, die eine Positionsbestimmung oder die Bestimmung von Lokalisierungsdaten eines Mobilfunkendgerätes erlauben. Neben GPS-Empfängern, sind beispielsweise Ortungsalgorithmen über eine Zellidentifikation in einem zellularen Mobilfunknetz, Positionsbestimmungen über Triangulation usw. bekannt.

In einem nächsten Schritt 610 kann nun ein Disponent in einer Rettungsleitstelle die mündliche Frage nach der Zustimmung zur Ortung des Notrufenden einholen. Hierbei werden einem Schritt 612 zwei Varianten unterschieden. Ist der Notrufende nicht in der Lage, seine Zustimmung zu geben, beispielsweise weil ihm Sprechen nicht mehr möglich ist, so startet der Disponent in einem Schritt 614 die Ortung, da er dann von einer Gefahr für Leib und Leben des Notrufenden ausgeht. Erteilt der Notrufende seine Zustimmung, so kann der Disponent in einem Schritt 616 die Ortung ebenfalls starten. In einem Schritt 618 wird dieser Ablauf dokumentiert, und in einem Schritt 620 startet das System die Ortung.

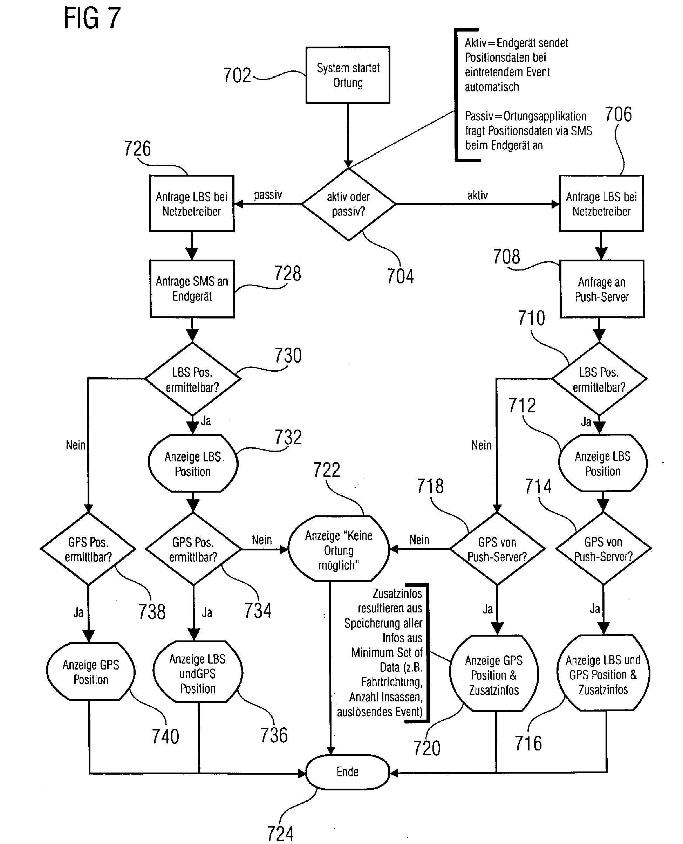

Ein Ausführungsbeispiel eines Ablaufs einer Abfrage von Positionsdaten an einem Push-Server ist in der Fig. 7 dargestellt. Das in der Fig. 7 dargestellte Ausführungsbeispiel geht davon aus, dass eine Ortung über LBS-Ortung, d. h. über o.g. Ortungsalgorithmen innerhalb eines Mobilfunknetzes als auch über GPS durchgeführt werden kann und das notrufende Endgerät beide Varianten unterstützt. In einem Schritt 702 wird zunächst die Ortung im System gestartet. Dabei wird in einem nachfolgenden Schritt 704 unterschieden, ob das Endgerät aktiv Lokalisierungsdaten oder Positionsdaten bereitstellt, d. h. ob das Endgerät automatisch bei einem eintretenden Event oder Ereignis, d. h. einer Notfallsituation, Lokalisierungsdaten an einen Push-Server übermittelt, oder ob das Endgerät passiv ist, d. h. ob die Ortungsapplikation die Positionsdaten beispielsweise per SMS beim Endgerät anfragen soll.

Im Falle einer aktiven Bereitstellung kann dann eine Lokalisierungsanfrage in einem Schritt 706 an den Netzbetreiber gesendet werden. Nachfolgend kann in einem Schritt 708 die Anfrage an den Push-Server gesendet werden. Der Schritt 710 unterscheidet, ob die LBS-Position ermittelbar ist oder nicht, d. h. ob der Netzbetreiber Lokalisierungsdaten bereitstellen kann. Ist dies der Fall, so kann die LBS-Position in einem Schritt 712 angezeigt werden und in einem Schritt 714 können die GPS-Daten vom Push-Server angefragt werden. Sind sowohl LBS-Lokalisierungsdaten als auch GPS-Daten vorhanden, so können diese in einem Schritt 716 auch gemeinsam angezeigt bzw. ausgewertet werden. Ferner können Zusatzinformationen vorhanden sein und angezeigt werden, wobei diese Zusatzinformationen aus der Speicherung verschiedener Informationen resultieren können, beispielsweise im Format des MSD (MSD = Minimum Set of Data, minimaler Datensatz), wie z. B. Fahrtrichtung, Anzahl der Insassen, auslösendes Event usw. Auf das MSD wird im Folgenden noch im Detail eingegangen werden.

Sollte die Position des Mobilfunkendgerätes im Schritt 710 über LBS nicht ermittelbar sein, so werden im Schritt 718 die GPS-Daten vom Push-Server angefragt, und sofern vorhanden, in einem Schritt 720, gegebenenfalls wieder inklusive der Zusatzinformationen, angezeigt. Sollten vom Push-Server keine GPS-Daten vorhanden sein, so ist keine Anzeige bzw.

Ortung möglich, was in einem Schritt 722 zunächst angezeigt wird, wonach der Algorithmus dann im Schritt 724 endet.

Sollte das Endgerät passiv sein, so wird der Schritt 704 von einem Schritt 726 gefolgt, in dem eine LBS-Anfrage beim Netzbetreiber gestellt wird. Nachfolgend wird in einem Schritt 728 die Anfrage beispielsweise per SMS an das Endgerät gestellt. Wird in einem Schritt 730 festgestellt, dass die LBS-Position ermittelbar ist, so wird diese in einem Schritt 732 angezeigt. In einem Schritt 734 wird überprüft, ob die GPS-Position ebenfalls ermittelbar ist, und sollte dem so sein, so werden sowohl LBS- als auch GPS-Positionen im Schritt 736 gemeinsam angezeigt, wonach der Algorithmus dann wiederum im Schritt 724 endet.

Sollten im Schritt 730 keine LBS-Positionen ermittelbar sein, so werden die GPS-Positionen im Schritt 738 angefragt und, falls vorhanden, im Schritt 740 angezeigt. Sollte keine GPS-Position ermittelbar sein, so erfolgt im Schritt 722 eine Anzeige, dass keine Ortung möglich ist, wonach der Algorithmus wiederum im Schritt 724 endet.

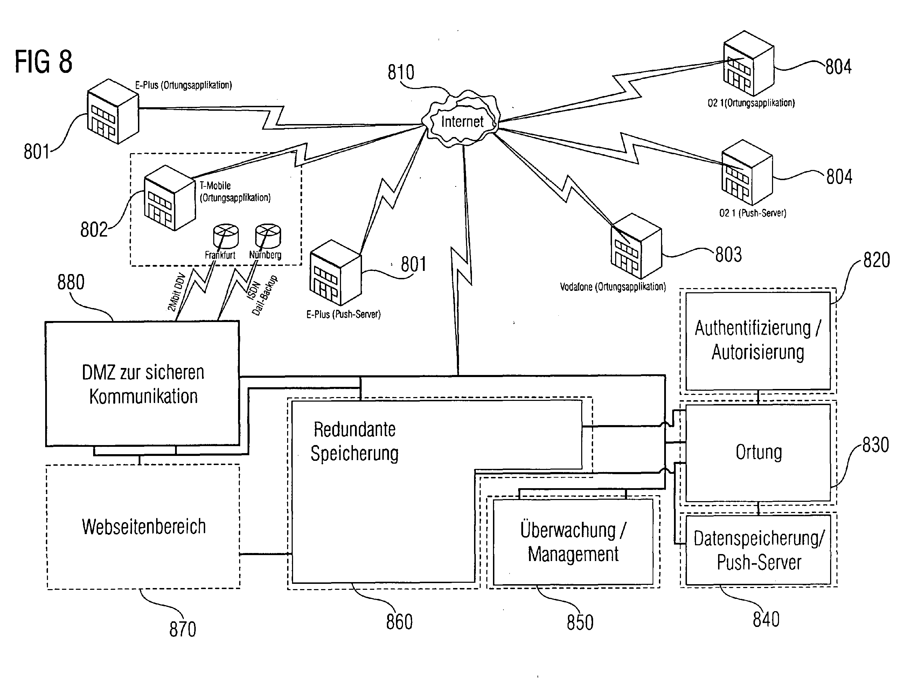

Fig. 8 zeigt ein Ausführungsbeispiel für eine Systemintegration eines Push-Servers. Die Fig. 8 zeigt mehrere Mobilfunkanbieter 801, 802, 803 und 804, die über Ortungsapplikationen bzw. eigene Push-Server verfügen können. Die Mobilfunkanbieter sind an das Internet 810 angebunden. Das Ortungssystem ist ebenfalls mit dem Internet 810 verbunden und umfasst einen Block 820 zur Authentifizierung und Autorisierung, einen Block 830 zur Ortung und einen Block 840 zur Datenspeicherung, in dem die Push-Server angeordnet sein können. Es ist anzumerken, dass in dem Ausführungsbeispiel der Fig. 8 alle Komponenten als Beispiel doppelt ausgelegt sind, um durch die erreichte Redundanz zusätzliche Betriebssicherheit zu schaffen. Das Ortungssystem umfasst ferner einen Block 850 zu Überwachungs- und Managementzwecken, sowie einen Block 860 zur redundanten Speicherung. Fig. 8 zeigt ferner einen Web-Seitenbereich 870 sowie ein DMZ 880 (DMZ = DeMilitarized-Zone, entmilitarisierte Zone) zur sicheren Kommunikation mit Ortungsapplikationen der Mobilfunkanbieter, in der Fig. 8 ist dies beispielsweise zum Anbieter 802 gezeigt.

In Ausführungsbeispielen kann bedingt durch die Anforderungen an die Verfügbarkeit, sämtliche zum Einsatz kommende Hardware redundant ausgelegt werden. In einem Ausführungsbeispiel könnte die folgende Konfiguration als Musterkonfiguration auf Basis von HP-Systemen (HP = Hewlett Packard) in einem Push-Server zum Einsatz kommen:

| Anz. | System |
|---|---|
| 2 | HP DL380G5 |
| | HP 4GB FBD PC2-530 2x1GB Kit |
| | HP Slim 24X Carbon Combo Drive |
| | 2x HP 36GB 10K SAS 2.5 Hot Plug Hard Drive |
| | HP Smart Array P400/256 Controller |
| | HP SC11Xe HBA |
| | Redundante Netzteile |
| | 7x24x4 vor Ort Service |

Einige Ausführungsbeispiele kommen ohne weitere Hardware aus, da eine Ablage der Produktivdaten und deren Sicherung über bestehende SAN-Infrastrukturen erfolgen kann (SAN = Storage Area Network, Speicherbereichsnetzwerk), vergleiche Fig. 8. Durch den Einsatz von beispielsweise Virtualisierungsmodulen kann auch aktuell im Betrieb befindliche SAN-Infrastruktur in sich redundant ausgelegt werden.

Ferner kann in einem Ausführungsbeispiel die folgende Software zum Einsatz kommen:

| Anz. | Lizenz |
|---|---|
| 2 | Microsoft Windows 2003 Enterprise Server R2 (es kann die Enterprise-Version verwendet werden, da diese die geforderten Clusterfunktionalitäten beinhaltet) |
| 2 | Microsoft SQL Server Enterprise 2000 |
| 2 | Veritas Backup Exec SQL Client |
| 2 | Faxgateway (Ferrari) |
| 2 | PDFlib (kommerzielle Version) |

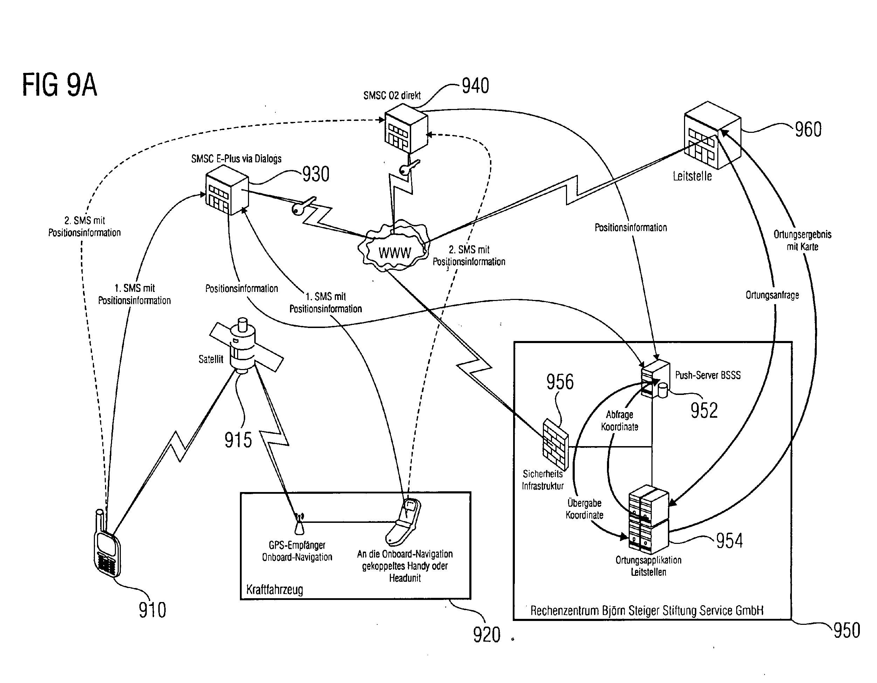

Die Fig. 9a zeigt ein Ausführungsbeispiel einer Integration eines Push-Servers in einem System, sowie die beteiligten Schnittstellen. Fig. 9a zeigt ein erstes Mobilfunkendgerät 910, welches beispielsweise mit einem GPS-Empfänger ausgerüstet ist und somit über Empfangssignale von GPS-Satelliten, wobei in der Fig. 9a stellvertretend der Satellit 915 dargestellt ist, Lokalisierungsdaten ermitteln kann. Als Alternative ist in der Fig. 9a ein zweites Mobilfunkendgerät 920 dargestellt, das beispielsweise in einem Kfz (Kfz = Kraftfahrzeug) installiert sein könnte und über einen in dem Kfz befindlichen GPS-Empfänger Lokalisierungsdaten erhalten kann. Hier könnte beispielsweise eine Übertragung über Bluetooth (ein Standard zur schnurlosen Kurzstreckenkommunikation) zum Einsatz kommen.

Kommt es nun zu einer Notfallsituation, so können die Mobilfunkendgeräte 910 und 920 je eine erste SMS mit Positionsinformation bzw. Lokalisierungsdaten an ein erstes SMSC 930 eines ersten Mobilfunkanbieters senden, sowie eine zweite SMS mit Positionsinformation bzw. Lokalisierungsdaten an ein SMSC 940 eines zweiten Mobilfunkanbieters. Das Versenden zweier SMS kann zur Erhöhung der Betriebssicherheit, durch zusätzliche Redundanz dienen. Die beiden SMSCs 930 und 940 sind über gesicherte Verbindungen und das Internet mit einem Rechenzentrum 950 verbunden, das in der Fig. 9a beispielhaft als das Rechenzentrum der Björn Steiger Stiftung Service GmbH ausgeführt ist. In dem Rechenzentrum 950 befindet sich ein Push-Server 952, eine Ortungsapplikation 954 und entsprechende Sicherheitsinfrastruktur 956. Ferner zeigt die Fig. 9a eine Leitstelle 960, die hervorgerufen durch einen Notruf, der in der Fig. 9a beispielhaft aus dem Internet kommend dargestellt ist, eine Ortungsanfrage an das Rechenzentrum stellen kann, woraufhin dieses der Leitstelle das Ortungsergebnis beispielsweise inklusive einer geographischen Karte zur Auswertung zur Verfügung stellt.

Wie in der Fig. 9a dargestellt, senden die Mobilfunkendgeräte je zwei SMS mit den Positionsinformationen oder Lokalisierungsdaten, die zeitlich versetzt sein können, beispielsweise um einige Sekunden. Die jeweils zweite SMS kann über ein SMSC-Gateway eines anderen Netzbetreibers versendet werden, um wiederum die Verfügbarkeit und Zuverlässigkeit noch weiter zu erhöhen.

In Ausführungsbeispielen kann die Architektur des Push-Servers so gestaltet werden, dass neue Endgeräte mit individuellem Positionsformat leicht eingebunden werden können. Beispielsweise können Benefon TrackOne, Benefon Seraph, Software Client Windows Mobile 5, Software Client Symbian, Java Client für Blackberry Endgeräte bzw. Systeme usw. unterstützt werden. Ferner können Headunits von Automobilherstellern, die Daten als MSD übermitteln, verwendet werden. Ausführungsbeispiele können die Darstellung zusätzlicher Informationen zur Ortung, die beispielsweise aus dem Einsatz des MSD resultieren, wie beispielsweise Fahrzeugtyp, Anzahl der Insassen, Auslöser für die Notfallsituation usw. erlauben.

Das Ortungssystem oder der Push-Server können via VPN (VPN = Virtual Private Network, gesicherte/verschlüsselte Verbindung) an SMSC-Gateways angebunden werden. Beispielsweise kann das System über eine Langwahlnummer erreichbar sein, so dass eine Übermittlung der Positionsdaten via GPS auch im Ausland ermöglicht wird. Aus Redundanzgründen können wiederum mehrere SMSC-Gateway-Anbindungen implementiert werden.

Um möglichst viele verschiedene Endgeräte, die Aktivpositionsdaten bei Eintreten eines Events bzw. einer Notfallsituation senden können, zu unterstützen, können Ausführungsbeispiele vielerlei Positionsdatenformate zulassen. Beispielsweise könnten in Ausführungsbeispielen auch ein intelligenter Parser zum Einsatz kommen, der bestehende Formate entsprechend anpasst.

In einem Ausführungsbeispiel kann beispielsweise das MSD zum Einsatz kommen.

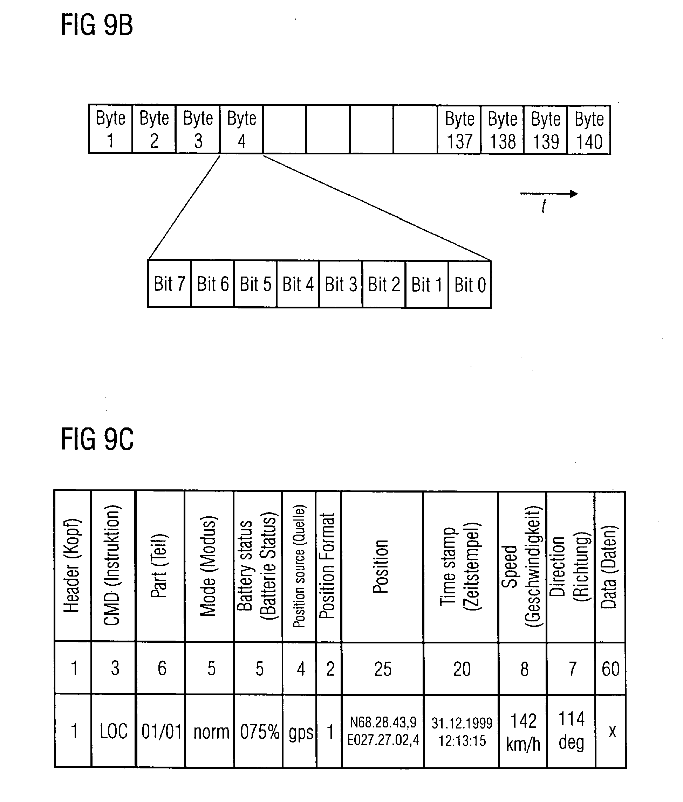

Die Fig. 9b zeigt beispielhaft das Format eines MSD. Die Fig. 9b zeigt eine Folge von 140 Bytes, wobei in jedem Byte 8 Bits vorhanden sind. Die nachfolgende Tabelle beschreibt das Format eines so genannten Frames oder Blocks.

Die 140 Bytes werden dabei in 8 Blöcke unterteilt, deren Größe jeweils in der Spalte "Größe" angegeben ist, ihr Typ in der Spalte "Typ". Bei physikalischen Größen ist in der Spalte "Einheit" jeweils die Einheit der Werte angegeben. Der Wert zwischen der Spalte der Einheit und der Beschreibung gibt an, ob der Wert zwingend vorhanden sein muss, "M" steht dabei für engl. mandatory und meint "zwingend", "o" steht für optional. Folgende Blöcke sind demnach vorhanden:
1. Versionsidentifikation und Nachrichtenidentifikation (auch engl. eCall MSD Format Version and Message Identifier <MSD Vers="2">)
2. Kontrollinformation (engl. Control), Bit7: 1= Automatische Aktivierung (engl. automatic activation) 0= Manuelle Aktivierung (engl. manual activation), Bit6: 1= Test Anruf (engl. test call), Bit5: 1= Lokalisierungsdaten unsicher (engl. no confidence in position), Bit4: frei für Kraftfahrzeugtypidentifikation, z.B. Personenfahrzeug, Lastkraftwagen, Motorrad, gefährliche Güter, Behördenfahrzeug usw. (engl. free for vehicle type encoding, e. g. passenger vehicle, truck, motorbike, dangerous good, government car etc.)
3. Kraftfahrzeugidentifikationsnummer nach ISO 3779 (engl. Vehicle identification = VIN number according ISO 3779)
4. Zeitstempel der Erfassungszeit der Lokalisierungsdaten in koordinierter Weltzeit (engl. coordinated universal time = UTC) in Sekunden (engl. Timestamp of incident event), Position in Winkelmillisekunden (engl. milliarcsec) des Globalen Navigationssatellitensystems (engl. Global Navigation Satellite System) nach Breitengrad (engl. lattitude) und Längengrad (longitude)
5. Richtung der Bewegung (engl. Direction of Travel)
6. Internet Protokolladresse des Dienstanbieters (engl. Service Provider IP Address)
7. Delimiter oder Abgrenzer
8. Optionale Daten (engl. optional data), weitere Daten in XML-Kodierung (engl. further data encoded in XML), deren Format noch festgelegt werden wird (engl. tbd = to be defined)

| Block Nr./ No. | Name | Größe/ engl. Size | Typ | Einheit/e ngl. Unit | | Beschreibung/ Description |
|---|---|---|---|---|---|---|
| 1 | Version ID | 23 Byte | String/ Buchstabenkette | | M | Versionsidentifikation und Nachrichtenidentifikation |
| 2 | Kontrollinformation | 1 Byte | Integer/Gan zzahl | | M | Bit 7: 1 = Automatische Aktivierung, 0 = Manuelle Aktivierung Bit 6: 1 = Test Anruf Bit 5: 1 = unsichere Lokalisierungsdaten Bit 4 - 0: frei für Kraftfahrzeugtypidentifikation, z.B. Personenfahrzeug, Lastkraftwagen, Motorrad, gefährliche Güter, Behördenfahrzeug usw. |
| 3 | Kraftfahrzeugidentifikationsnummer | 20 Bytes | String/ Buchstabenkette | | M | Kraftfahrzeugidentifikationsnummer |
| 4 | Zeitstempel der Lokalisierungsdaten | 4 Bytes | Integer/Gan zzahl | koordi nierte Weltzeit in Sekunden | M | Zeitstempel der Erfassungszeit Lokalisierungsdaten |
| | | 4 Bytes | Integer/Gan zzahl | Winkel millisekunden | M | Position Breitengrad (WGS84) |
| | | 4 Bytes | Integer/Gan zzahl | Winkel millisekunden | M | Position Längengrad (WGS84) |
| 5 | | 1 Byte | Integer/Gan zzahl | Grad | M | Richtung der Bewegung |
| 6 | Dienstanbieters | 41 Bytes | String/ Buchsta benkette | IPV6 | O | Internet Protokolladresse des Dienstanbieters Beispiel: [2001:0db8:85a3: 08d3:1319:8a2e:037β:7344 ] |
| 7 | Delimiter | 6 Bytes | String/ Buchstabenkette | | | MSD Delimiter </MSD> |
| 8 | Optionale Daten | 36 Bytes | String/ Buchstabenkette | Noch festzulegen | O | |
| | Summe: | 140 Bytes | | | | |

Die nachfolgende Tabelle zeigt ein MSD-Formatfeld eines Bestätigungs-MSD-Blocks im Detail, das Format der Tabelle gleicht dem der Obigen. Das MSD-Formatfeld setzt sich aus drei Blöcken zusammen:
1. Nachrichtenidentifikation zur Identifikation einer vorangegangenen Nachricht (engl. Acknowledge Message Identifier <MSDACK ID="1"> referring to the corresponding Message ID of the received MSD)
2. Statusfeld, 1 = positive Bestätigung des Empfangs der vorangegangenen Nachricht, 0 = Wiederholung der Nachricht erwartet (engl. case of 0: positive acknowledge, 1: error, repeat MSD transmission)
3. Delimiter oder Abgrenzer

| Block No. | Name | Size | Type | Unit | | Description |
|---|---|---|---|---|---|---|
| 0 | ID | 15 Byte | String/ Buchstabenkette | | M | Nachrichtenidentifikation zur Identifikation einer vorangegangenen Nachricht |
| 1 | Status | 19 Bytes | String/ Buchstabenkette | | M | 1 = positive Bestätigung des Empfangs der vorangegangenen Nachricht, 0 = Wiederholung der Nachricht erwartet |
| 2 | Delimiter | 9 Bytes | String/ Buchstabenkette | | M | MSD Delimiter |
| | Summe: | 43 Bytes | | | | |

Die Fig. 9c zeigt exemplarisch das Benefon-Format, wie es bereits heutzutage von einigen Endgeräten unterstützt wird und in Ausführungsbeispielen zugleich als Datensatzformat für Softwareclients dienen kann, wie beispielsweise Windows Mobile 5, Symbian, Java, usw. Fig. 9c zeigt folgende zwölf Spalten (von rechts nach links) deren Größe jeweils in Bytes in der zweiten Zeile und ein Inhaltsbeispiel in der dritten Zeile angeben ist:
1. Kopffeld (engl. header)
2. Instruktion (engl. command =cmd) hier Lokalisierungsdaten (engl. LOC)
3. Teil der Nachricht (engl. part)
4. Modus des Endgerätes (engl. Mode), hier norm=normal
5. Ladestatus der Batterie (engl. battery status)
6. Quelle der Lokalisierungsdaten (engl. Position source), hier GPS
7. Format der Lokalisierungsdaten (engl. position format)
8. Position
9. Zeitstempel (engl. time stamp)
10. Geschwindigkeit (engl. speed)
11. Richtung (engl. direction)
12. Daten (engl. data)

Ferner können Ausführungsbeispiele ein weiteres Datenformat nutzen, mit dem beispielsweise der Push-Server die per SMS gesendeten Informationen der aktuell in den Leitstellen betriebenen Ortungsapplikation zur Verfügung stellt. Zusätzlich zu den Inhalten des MSD kann in Ausführungsbeispielen die Absender MSISDN enthalten sein, also die Rufnummer der absendenden SIM-Karte (SIM = Subscriber Identity Module, Teilnehmer Identifikationsmodul), sowie ein Zeitstempel mit beispielsweise Datum und Uhrzeit der Positions-übermittlung. Eine Zeitdauer der Speicherung der Daten könnte in Ausführungsbeispielen über einen Parameter in einer Konfigurationsdatei individuell an Datenschutzanforderungen angepasst werden können.

Ferner können Ausführungsbeispiele die Möglichkeit bieten, bei Eingang einer aktiv gesendeten Positionsinformation ein Event bzw. Ereignis auszulösen. In Ausführungsbeispielen kann dieses Event je Kunde definierbar sein, bzw. nur für zahlende Kunden ausgelöst werden. Beispielsweise könnte ein solches Event ein Versenden eines Faxes, einer SMS oder einer E-Mail an die zuständige Rettungsleitstelle auslösen. Ob bei Eingang einer Positions-SMS ein solches Event ausgelöst wird oder nicht, könnte beispielsweise in einem Kundendatensatz hinterlegt sein.

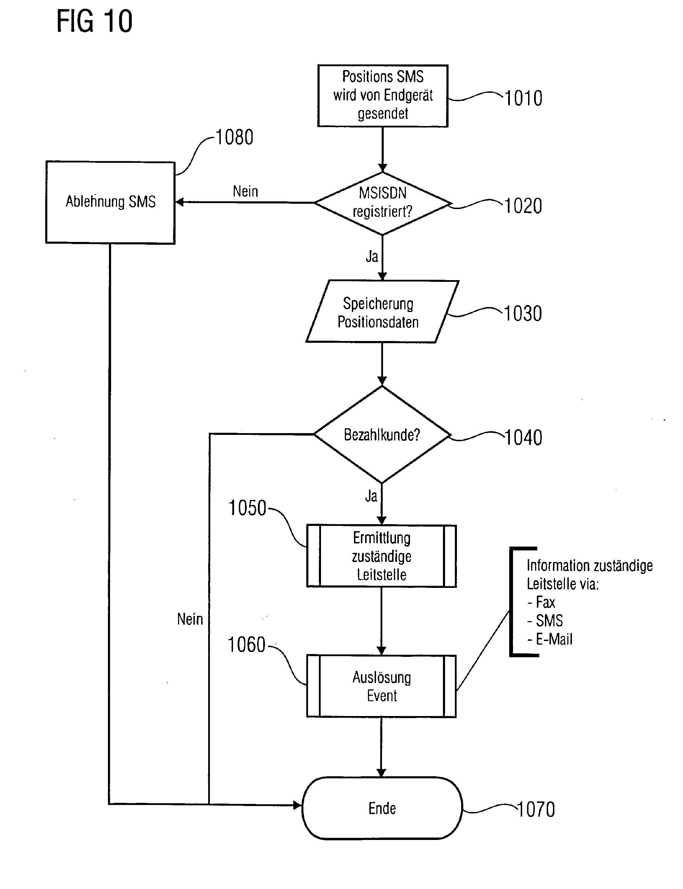

Die Fig. 10 zeigt ein Ausführungsbeispiel eines Ablaufdiagramms zum Auslösen eines solchen Ereignisses oder Events. In einem ersten Schritt 1010 wird beispielsweise eine Positions-SMS von dem Endgerät gesendet. Nachfolgend wird in einem Schritt 1020 überprüft, ob die jeweilige MSISDN registriert ist. Ist dies der Fall, so werden die Positionsdaten in einem Schritt 1030 gespeichert. Handelt es sich um einen registrierten Kunden, was in einem Schritt 1040 überprüft wird, so kann in einem nachfolgenden Schritt 1050 die zuständige Leitstelle ermittelt werden und ein entsprechendes Event in einem Schritt 1060 ausgelöst werden. Wie bereits oben erwähnt, kann ein solches Event das Versenden eines Faxes, einer SMS oder einer E-Mail umfassen. Der Algorithmus endet dann im Schritt 1070. Sollte die MSISDN des Versenders der Positions-SMS im Schritt 1020 ergeben, dass dieser nicht registriert ist, so wird die SMS abgelehnt, was in Fig. 10 durch den Schritt 1080 angedeutet ist.

Ausführungsbeispiele können die Clusterfähigkeit des Push-Servers unterstützen. Somit können Ausführungsbeispiele in der Lage sein, bei physikalischem Ausfall eines produktiven Knotens selbstständig und automatisiert auf einen inaktiven Knoten zu schwenken. Ein ähnliches Verhalten kann in Ausführungsbeispielen realisiert sein, wenn auf einem aktiven Knoten ein laufender relevanter Dienst nicht mehr zur Verfügung steht.

Ausführungsbeispiele können neben grundsätzlichen Systemlogs, d. h. Systemdokumentationen der internen Vorgänge, auch eine Dokumentation bieten, welche erfassen kann, wann eine Position von welcher MSISDN gesendet wurde und wann eine Position von einer aktuell betriebenen Ortungsplattform abgeholt bzw. angefordert wurde. Zusätzlich können Ausführungsbeispiele alle Aktionen, die durch einen E-venthandler ausgelöst werden, dokumentieren. Die Intervalle, zu denen die Dokumentationen rotiert werden, können beispielsweise in einer Konfigurationsdatei festgelegt werden.

In Ausführungsbeispielen kann die notwenige Hardware ebenso wie die Ortungsplattformen in hochverfügbaren Rechenzentren betrieben werden. Der physische Aufbau von Ausführungsbeispielen, bzw. Serverkomponenten kann in getrennten Brandabschnitten erfolgen, somit können in Ausführungsbeispielen Clusterknoten entsprechend getrennt aufgebaut werden.

Die Systemüberwachung und Alarmgeneration kann in Ausführungsbeispielen auch über bestehende Infrastrukturen oder mit Hilfe von Überwachungssoftware, wie beispielsweise WhatsUp Gold, realisiert sein. Zusätzlich zu den Standard-überwachungsfunktionen können Ausführungsbeispiele ermöglichen, den Zustand einer Applikation hinsichtlich Fehlern, Warnungen usw. zu überwachen und gegebenenfalls zu alarmieren.

Ausführungsbeispiele bieten somit den Vorteil, dass in einer Notfallsituation Positionsdaten oder Lokalisierungsdaten eines Notrufenden zentral in einer Vorrichtung zum Handhaben von Lokalisierungsdaten verfügbar gemacht werden. Insbesondere kann so in Notfällen eine schnellere und zuverlässigere Ortung eines in Not Geratenen erfolgen, was beim Einsatz der Rettungskräfte wertvolle Zeit sparen kann. Ferner können Ausführungsbeispiele den Vorteil bieten, dass automatisiert Ortungsinformation an die Rettungskräfte weitervermittelt wird. In einem solchen Ausführungsbeispiel könnte eine Rettungsleitstelle, die die Ortungsapplikation betreibt, Lokalisierungsdaten auch an die Rettungskräfte übermitteln, beispielsweise über einen Datenkanal, eine SMS oder Ähnliches. Somit könnte ein beispielsweise in einer Ambulanz befindliches Navigationssystem diese Daten direkt übernehmen und die Einsatzkräfte schnell und gezielt zu dem in Not Geratenen führen. Ferner werden so in Ausführungsbeispielen weitere Mechanismen ermöglicht, die automatisiert in der Nähe eines Notfalls befindliche Rettungskräfte ansprechen bzw. alarmieren können.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken könnten, dass das entsprechende Verfahren ausgeführt wird. Allgemein besteht die Erfindung somit auch in einem Computerprogrammprodukt mit auf einem maschinenlesbaren gespeicherten Programmcode zur Durchführung des erfindungsgemäßen Verfahrens, wenn das Computerprogrammprodukt auf einem Rechner abläuft. Mit anderen Worten ausgedrückt, könnte die Erfindung somit als ein Computerprogramm mit einem Programmcode zur Durchführung des Verfahrens realisiert werden, wenn das Computerprogrammprodukt auf einem Computer abläuft.

## Patentansprüche

1. Vorrichtung (100) zum Handhaben von Lokalisierungsdaten eines Mobilfunkendgerätes, das angepasst ist, um über einen Sprachkanal und einen Datenkanal zu kommunizieren, mit folgenden Merkmalen:
einer Einrichtung (110) zum Empfangen der Lokalisierungsdaten des Mobilfunkendgerätes über den Datenkanal;
einer Einrichtung (120) zum Speichern der Lokalisierungsdaten des Mobilfunkendgerätes; und
einer Einrichtung (130) zum Ausgeben der Lokalisierungsdaten an eine Rettungsleitstelle über einen weiteren Datenkanal ansprechend auf eine Notfallsituation des Mobilfunkendgerätes.

2. Vorrichtung (100) gemäß Anspruch 1, die ferner eine Einrichtung (140) zur Detektion der Notfallsituation des Mobilfunkendgerätes aufweist.

3. Vorrichtung (100) gemäß Anspruch 2, die ferner eine Einrichtung (150) zum Empfangen einer Lokalisierungsdatenab- oder anfrage aufweist und wobei die Einrichtung (140) zum Detektieren ausgebildet ist, um die Notfallsituation durch Empfang einer Lokalisierungsdatenabfrage der Rettungsleitstelle zu detektieren.

4. Vorrichtung (100) gemäß einem der Ansprüche 1 bis 3, bei der die Einrichtung (110) zum Empfangen der Lokalisierungsdaten ausgebildet ist, um die Lokalisierungsdaten über ein Mobilfunknetz oder ein SMSC zu empfangen.

5. Vorrichtung (100) gemäß einem der Ansprüche 1 bis 4, bei der die Einrichtung (110) zum Empfangen der Lokalisierungsdaten ausgebildet ist, um die Lokalisierungsdaten über eine SMS, MMS, E-Mail oder einen Datendienst über den Datenkanal zu empfangen.

6. Vorrichtung (100) gemäß einem der Ansprüche 3 bis 5, bei der die Einrichtung (150) zum Empfangen der Lokalisierungsdatenabfrage ausgebildet ist, um die Lokalisierungsdatenabfrage über das WWW, das Internet, eine IP oder einer TCP-Verbindung zu empfangen.

7. Vorrichtung (100) gemäß einem der Ansprüche 3 bis 6, die ferner eine Einrichtung (160) zur Authentifizierung oder Autorisierung der Lokalisierungsdatenabfrage aufweist.

8. Vorrichtung (100) gemäß einem der Ansprüche 1 bis 7, bei der die Einrichtung (120) zum Speichern ferner ausgebildet ist, um Zusatzinformationen zu den Lokalisierungsdaten zu speichern.

9. Vorrichtung (100) gemäß Anspruch 8, bei der die Zusatzinformationen eine MSISDN, Gerätedaten, Ortungsoptionen, Teilnehmerdaten, Statusinformationen eines Fahrzeugs oder eines Teilnehmers, Fahrzeugtyp oder Auslöser für die Notfallsituation umfassen.

10. Vorrichtung (100) gemäß einem der Ansprüche 8 oder 9, bei der die Zusatzinformationen Patientendaten, eine Blutgruppe, Vitaldaten oder medizinische Daten umfassen.

11. Vorrichtung (100) gemäß einem der Ansprüche 1 bis 10, die ferner eine Einrichtung zur Registrierung von Mobilfunkteilnehmern aufweist.

12. Vorrichtung (100) gemäß Anspruch 11, bei der die Einrichtung (120) zum Speichern ferner ausgebildet ist, um Lokalisierungsdaten oder Zusatzinformationen nur von registrierten Mobilfunkteilnehmern zu speichern.

13. Vorrichtung (100) gemäß einem der Ansprüche 1 bis 12, bei der die Einrichtung (130) zum Ausgeben ausgebildet ist, um die Lokalisierungsdaten an die Rettungsleitstelle über Fax, SMS, E-Mail oder MMS auszugeben.

14. Ortungssystem zur Ortung eines Mobilfunkendgerätes mit einer Vorrichtung zum Handhaben von Lokalisierungsdaten eines Mobilfunkendgerätes gemäß einem der Ansprüche 1 bis 13 und einer Rettungsleitstelle zum Auswerten der Lokalisierungsdaten.

15. Verfahren zur Ortung eines Mobilfunkendgerätes in einer Rettungsleitstelle mit folgenden Schritten:
Senden (508) von Lokalisierungsdaten über einen Datenkanal von dem Mobilfunkendgerät an eine Vorrichtung zum Handhaben von Lokalisierungsdaten gemäß einem der Ansprüche 1 bis 13;
Ausgeben (520) der Lokalisierungsdaten an die Rettungsleitstelle; und
Auswerten (528) der Lokalisierungsdaten in der Rettungsleitstelle.

16. Verfahren gemäß Anspruch 15, bei dem dem Schritt des Sendens (508) ein Schritt des Detektierens (504) einer Notfallsituation vorausgeht.

17. Verfahren gemäß einem der Ansprüche 15 bis 16, bei dem dem Schritt des Sendens (508) ferner ein Schritt des Bestimmens (502) von Koordinaten des Mobilfunkengerätes als Lokalisierungsdaten vorausgeht und/oder bei dem dem Schritt des Sendens (508) ferner ein Schritt des Aufbauens (506) eines Datenkanals vorausgeht.

18. Verfahren gemäß einem der Ansprüche 15 bis 17, bei dem dem Schritt des Ausgebens (520) ein Schritt des Empfangens (514) der Lokalisierungsdaten von dem Mobilfunkendgerät vorausgeht und/oder bei dem dem Schritt des Ausgebens (520) ferner ein Schritt des Speicherns (516) von Lokalisierungsdaten vorausgeht.

19. Verfahren gemäß einem der Ansprüche 15 bis 18, bei dem dem Schritt des Ausgebens (520) ferner ein Schritt des Empfangens (518) einer Lokalisierungsdatenabfrage vorausgeht und/oder bei dem dem Schritt des Auswertens (528) ferner ein Schritt des Empfangens (526) von Lokalisierungsdaten von der Vorrichtung zur Handhabung der Rettungsleitstelle vorausgeht.

20. Computerprogramm mit einem Programmcode zur Durchführung eines der Verfahren gemäß einem der Ansprüche 15 bis 19, wenn der Programmcode auf einem Computer abläuft.
